# EUROPEAN PATENT APPLICATION

(11) **EP 4 707 611 A1**
(43) Date of publication of application: **11.03.2026**
(21) Application number: 25226701.8
(22) Date of filing: 26.09.2022
(51) Int. Cl.: F04D 25/08, F04D 25/06, F04D 17/06, F04D 29/42, F04D 29/44, F04D 29/16, F04F 5/16, F04F 5/42, F04F 5/46

(54) **PORTABLE FAN**

(30) Priority: 27.09.2021 CN 202122350626 U; 30.11.2021 CN 202122980532 U; 30.11.2021 CN 202122972162 U; 10.12.2021 CN 202123124225 U; 16.05.2022 CN 202221164340 U
(62) Divisional of application: 22872189.0
(71) Applicant: Shenzhen Jisu Technology Co., Ltd, Shenzhen, Guangdong 518129 (CN)
(72) Inventor: ZHENG, Guanzheng, Shenzhen, Guangdong, 518129 (CN); XIE, Jiahang, Shenzhen, Guangdong, 518129 (CN); LI, Xiangfu, Shenzhen, Guangdong, 518129 (CN); YUAN, Shuiyong, Shenzhen, Guangdong, 518129 (CN); XIAO, Xin, Shenzhen, Guangdong, 518129 (CN); CAI, Chengrui, Shenzhen, Guangdong, 518129 (CN)
(74) Representative: Herrero & Asociados, S.L.

(57) **Abstract**

A portable fan includes: a housing; a mixed-flow fan; a pressurizing member. The housing is arranged with an air inlet portion and an air outlet portion. The pressurizing member is disposed at a front of the mixed-flow fan and includes a pressurizing seat. The pressurizing seat includes a pressurizing surface, and a radial size of at least part of the pressurizing surface gradually increases from a rear side to a front side. The mixed-flow fan includes a rotation seat, an extension wall, a motor, and first blades that are mounted on the rotation seat; the extension wall and the rotation seat cooperatively define a first cavity; the pressurizing seat has a second cavity; the extension wall is inserted into the second cavity; a projection of the first cavity is at least partially overlapped with a projection of the second cavity in the radial direction.

## Description

### TECHNICAL FIELD

The present disclosure relates to the field of fans, and in particular to a portable fan with large air volume and large air pressure.

### BACKGROUND

The common fan in daily life is the axial fan, the characteristics of the axial fan is that the path of the wind from the air inlet to the air outlet will not be offset radially, which is basically equivalent to the straight in and out, the wind enters the axial fan from the air inlet end axially, and then leaves axially from the air outlet end, which has small wind resistance, so the air volume loss is small. That is to say, those skilled in the art in the default situation, if they want to ensure that the air volume loss is small, will use axial fan blades to manufacture axial fan, over time, this forms a consensus, and then forms a technical bias that is difficult to change;

However, unlike other companies in the field that pursue low R&D costs and quickly produce products to seize market profits, the inventor of the present application has been deeply engaged in the field of fan technology, and has a deep understanding of fluid theory, fan product market and user pain points. After the research of the industry, it is found that taking the handheld fan or the ordinary desktop fan as an example, although the existing axial fan has small wind resistance and small air volume loss, it does not take into account other technical problems at all, that is, the air pressure of the axial fan is lower and the air supply distance is shorter. That is to say, although there is no loss of air volume, there is no increment to supplement, and the air supply distance is difficult to guarantee, so the general use distance of ordinary portable fans is about 1-1.5 meters, and you can't experience the refreshing feeling of blowing and enjoying the cool air if you are a little farther away. At the same time, because the fan blades are visible, the axial fan is easy to cut the fingers when infants and young children use it, or if foreign objects such as toys and chopsticks are stretched into the fan blades, it is easy to break or even debris flies and cuts the human body, and the existing axial flow fan has been completely unable to meet the user's safe use needs.

Moreover, the inventor of the present disclosure finds that some portable fans adopt centrifugal fan blades to overcome the difficulty of low air pressure, but after the wind enters the centrifugal fan axially from the air inlet end, and then leaves radially from the air outlet end, the wind direction changes greatly, the air volume loss is very serious, and the air output effect is difficult to meet the user's requirements.

In addition, although it is well known in the industry that Dyson has launched a blade-shrouded fan, in order to achieve the use of air volume, it is manufactured by ultra-high-speed fans, so its volume is generally 30*30* 150CM3 (cubic centimeter), occupies a very large area, inconvenient to use and inconvenient to carry, in addition, the price of Dyson's fan products is generally about 3000-8000 yuan, which is very expensive for ordinary families or individuals, and can even be said to be luxury, so this has no use value for ordinary users.

In recent years, there have been products and patents imitating Dyson's blade-shrouded fans, and they have also been used in portable scenarios such as handheld, but because the product cannot be thin, or because the pursuit of thinness and light is too much and the air volume and wind power are sacrificed, it cannot meet the needs of users, especially if the product uses an oblique flow fan, the motor and wind noise form a sharp and piercing noise, which is not acceptable to the user, so it cannot form a fan product with excellent performance.

Due to the existence of the above-mentioned technical problems and technical biases, the existing portable fans have been completely unable to meet the user's use needs, and at the same time, with the improvement of living standards, the abundance of fan application scenarios, people's requirements for portable fans that can be carried around are also getting higher and higher. The indepth study of the use safety issues and market products found that after several years of research and experiments, the inventor of the present application proposes a portable blade-shrouded fan to design a structure with large air volume, large air pressure and low noise on a small portable fan to solve many of the above-mentioned problems in the field of this art.

### SUMMARY OF THE DISCLOSURE

The present disclosure provides a portable fan, including: a housing; a mixed-flow fan; a pressurizing member. An air inlet portion is arranged at a rear side of the housing, an air outlet portion is arranged at a front side of the housing, the air inlet portion and the air outlet portion are fluidly communicated to each other through an interior of the housing. The mixed-flow fan is arranged inside the housing. The pressurizing member is disposed at a front of the mixed-flow fan and comprising a pressurizing seat. The pressurizing seat comprises a pressurizing surface, and a radial size of at least part of the pressurizing surface gradually increases radially from the rear side to the front side. The mixed-flow fan comprises a rotation seat, an extension wall, a motor, and a plurality of first blades; the plurality of first blades are mounted on the rotation seat; the extension wall and the rotation seat cooperatively define a first cavity having an opening facing the front side; the pressurizing seat has a second cavity having an opening facing the rear side; the extension wall extends to be inserted into the second cavity; an orthographic projection of the first cavity along a radial direction onto a side wall of the housing is at least partially overlapped with an orthographic projection of the second cavity along the radial direction onto the side wall of the housing; the motor is received in the first cavity and the second cavity.

### BRIEF DESCRIPTION OF THE DRAWINGS

FIG. 1 is a perspective view of a portable blade-shrouded fan according to a first embodiment of the present disclosure.
FIG. 2 is a decomposition schematic view of the portable blade-shrouded fan according to the first embodiment of the present disclosure.
FIG. 3 is a decomposition schematic view of the portable blade-shrouded fan according to the first embodiment of the present disclosure at another angle.
FIG. 4 is a cross-sectional view of the portable blade-shrouded fan according to the first embodiment of the present disclosure.
FIG. 5 is a cross-sectional view of the portable blade-shrouded fan according to the first embodiment of the present disclosure in another direction.
FIG. 6 is a schematic view of a front portion of a second housing, a pressurizing member, and a handle, and a wire plate of a portable blade-shrouded fan according to an embodiment of the present disclosure.
FIG. 7 is a perspective schematic view of a portable blade-shrouded fan according to an embodiment of the present disclosure with a first housing removed.
FIG. 8 is a perspective view of a portable blade-shrouded fan according to a second embodiment of the present disclosure.
FIG. 9 is a decomposition schematic view of the portable blade-shrouded fan according to the second embodiment of the present disclosure.
FIG. 10 is a decomposition schematic view of the portable blade-shrouded fan according to the second embodiment of the present disclosure at another angle.
FIG. 11 is a cross-sectional view of the portable blade-shrouded fan according to the second embodiment of the present disclosure.
FIG. 12 is a cross-sectional view of the portable blade-shrouded fan according to the second embodiment of the present disclosure in another direction.
FIG. 13 is a schematic view of a front portion of a second housing, a pressurizing member, and a handle, and a wire plate of a portable blade-shrouded fan according to an embodiment of the present disclosure.

### DETAILED DESCRIPTION

Technical solutions of the embodiments of the present disclosure will be clearly and completely described below by referring to the accompanying drawings in the embodiments of the present disclosure. Apparently, the described embodiments are only a part of, not all of, the embodiments of the present disclosure. All of the embodiments, which are obtained by any ordinary skilled person in the art based on the embodiments of the present disclosure without any creative work, shall be within the scope of the present disclosure.

The terms "first", "second", and "third" in the specification and claims of the present disclosure and the drawings are used to distinguish between different objects, instead of describing a particular order. In addition, the term "comprising" and any variations thereof are intended to cover non-exclusive inclusion. For example, a process, a method, a system, a product or an apparatus comprising a series of operations or units is not limited to the listed operations or units, but may further include operations or units that are not listed, or include other operations or units that are inherently included in the process, the method, the system, the product or the apparatus.

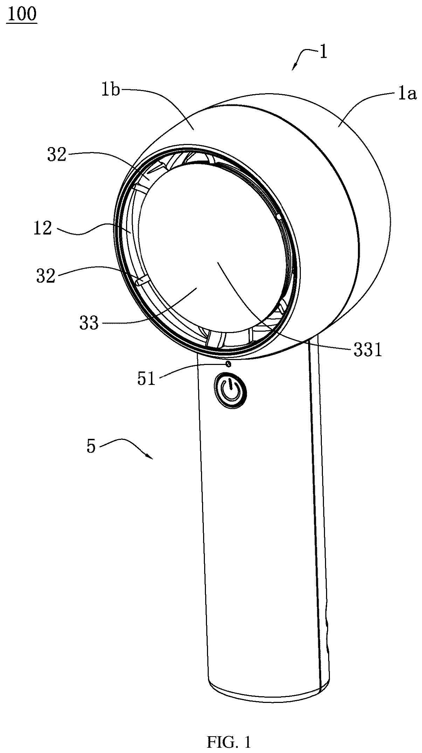

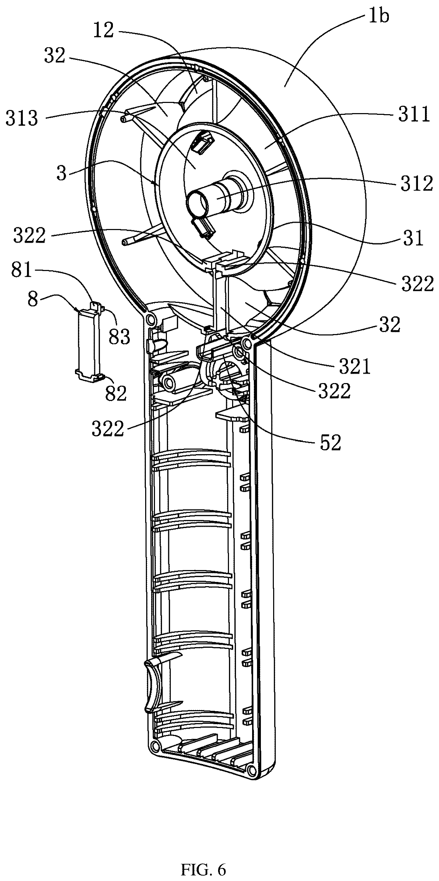

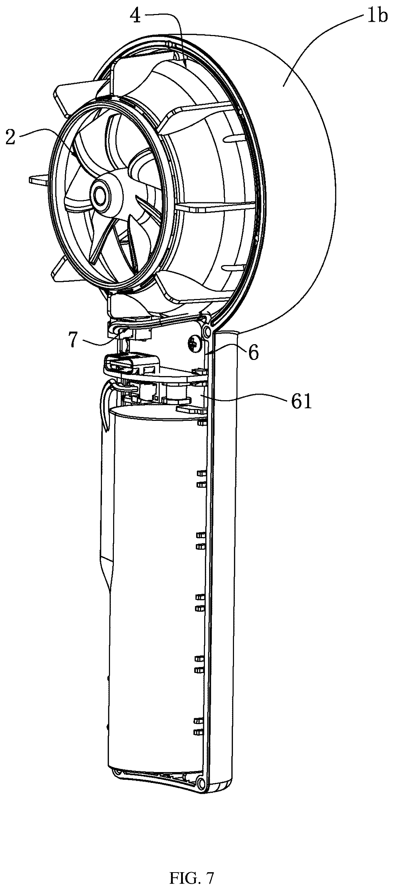

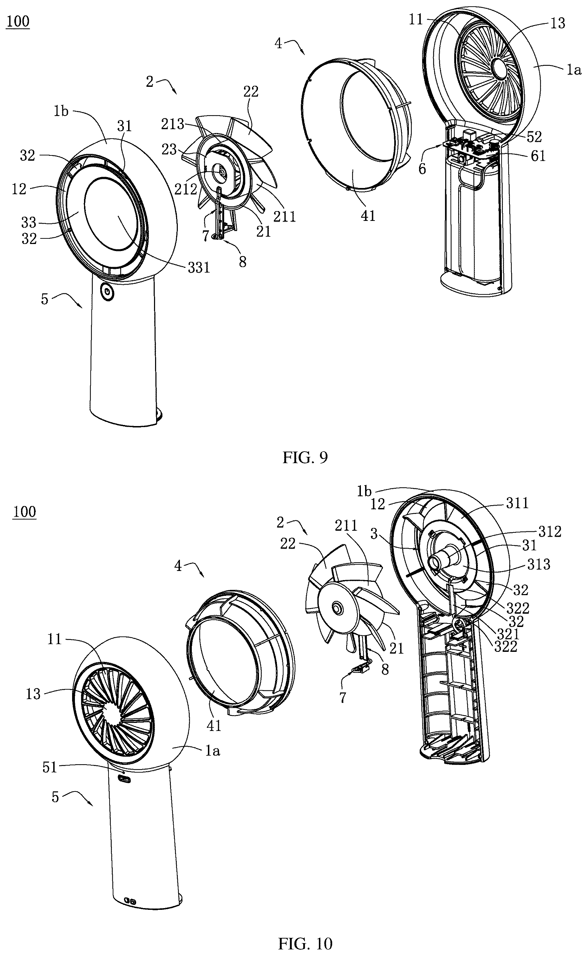

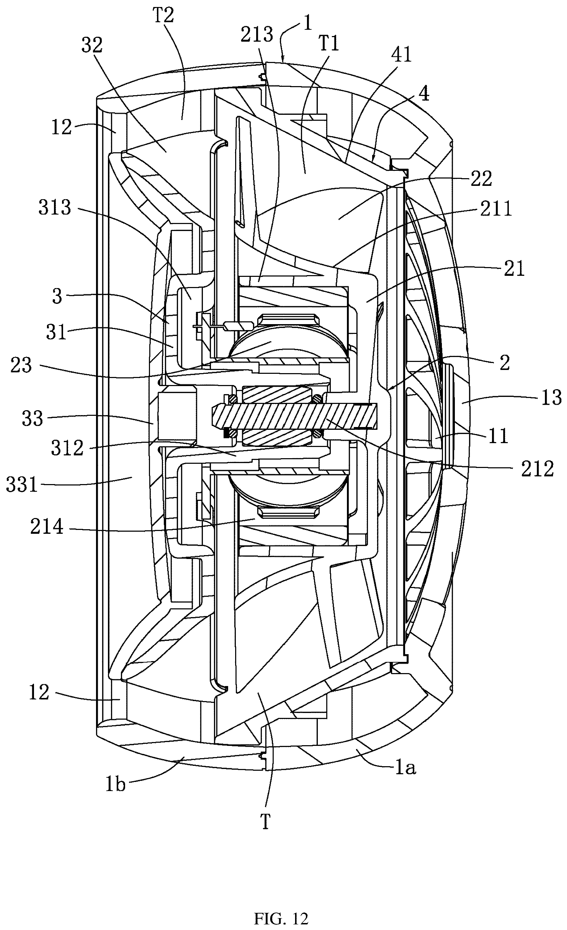

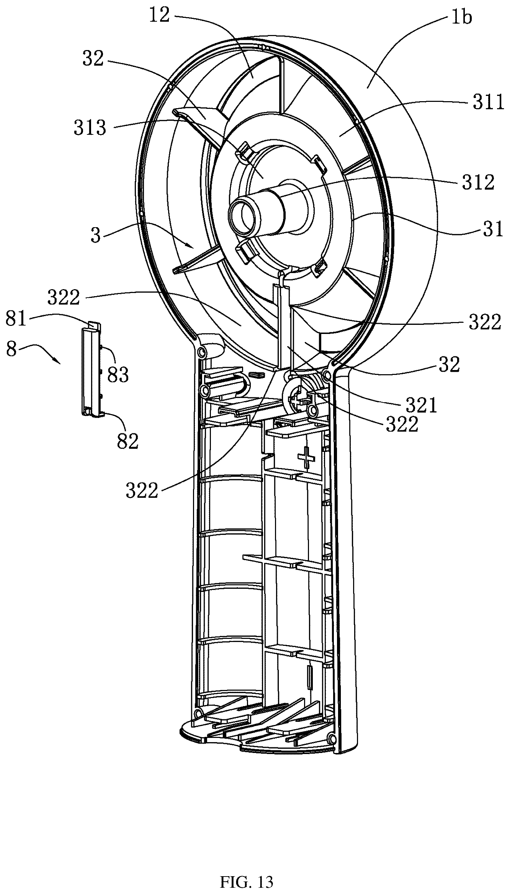

As shown in FIGS. 1 to 13, which are schematic diagrams of a portable blade-shrouded fan 100 according to a first embodiment of the present disclosure, the portable blade-shrouded fan 100 is a hand-held blade-shrouded fan, and the portable blade-shrouded fan 100 includes a handle 5 for the user to hold. Of course, the portable blade-shrouded fan 100 may be a clamping fan configured with a clip, a transformable fan configured with a bendable member for shaping and winding, a desktop fan configured with a stand, a floor fan configured with a telescopic stand, or a small fan not configured with the handle 5, clip, bendable member, stand, telescopic stand, etc., without being limited herein.

In other embodiments, a semiconductor cooling member (not shown) may be arranged on the handle 5, such that the user may carry the portable blade-shrouded fan 100 by means of the handle 5, and the semiconductor cooling member may automatically correspondingly adjust the cooling temperature according to the temperature of a portion that the user is in contact with the handle 5, thereby enhancing the user's comfort in carrying the fan. It should be understood that the portable blade-shrouded fan 100 is configured for blowing airflow to dissipate heat and cool down, and correspondingly, the semiconductor cooling member is configured for refrigeration. When a heating element is added to the portable blade-shrouded fan 100 for heat preservation, the semiconductor cooling member may further be configured for heat production to keep warm.

As shown in FIGS. 1 to 3, the portable blade-shrouded fan 100 includes a housing 1, a pressurizing member 3, and a mix-flow fan 2, the housing 1; a profile of the radial cross-section of each of the housing 1, the pressurizing member 3, and the mix-flow fan 2 has a substantially circular shape. The pressurizing member 3 is connected to a front side portion of the housing 1, and the pressurizing member 3 and the housing 1 are integrally molded. Of course, the pressurizing member 3 and the housing 1 may be separately molded, and the pressurizing member 3 is assembled to the housing 1. The mix-flow fan 2 is disposed in the housing 1 and is connected to a rear side of the pressurizing member 3, and the mix-flow fan 2 is rotatable around a rotation shaft 212 to generate an airflow. The extension direction perpendicular to and through the rotation shaft 212 is a radial direction, and the direction parallel to the rotation shaft 212 is an axial direction.

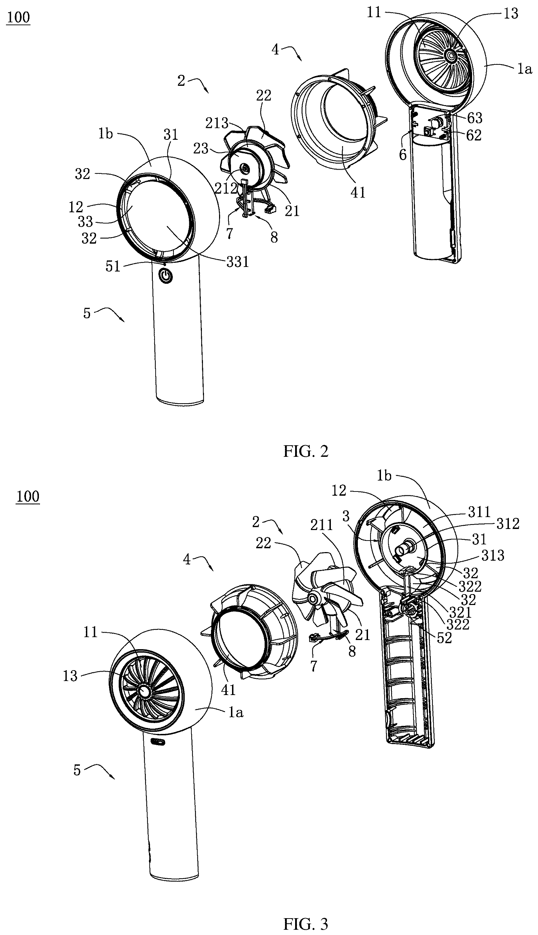

As shown in FIGS. 2 to 4, a rear side of the housing 1 is arranged with an air inlet portion 11 and, and a rear side of the housing 1 is arranged with an air outlet portion 12, the air inlet portion 11 and the air outlet portion 12 being connected within the housing 1. The air inlet portion 11 is disposed on an air inlet plate 13 and the air outlet portion 12 is disposed between a front end of the pressurizing member 3 and a front end of the housing 1. A lower end of the housing 1 forms the handle 5 for hand-held use by the user. The housing 1 includes a first housing 1a and a second housing 1b that can be mated with each other in a front-back direction. The first housing is firstly gradually increased along a radial direction of the air inlet portion from the front side to the rear side and is subsequently increased along the radial direction from the rear side to the front side. The second housing is gradually decreased along the radial direction from the rear side to the front side. The first housing 1a first extends radially enlarged backwardly only with a small section, that is, the first housing 1a as a whole can be considered to extend radially enlarged forwardly, such that the whole is curved and has a beautiful appearance. The small section of the first housing 1a extending radially enlarged backward may make the air inlet plate 13 partially received in the first housing 1a, such that the air inlet plate 13 will not be so obvious and unharmonious. The ratio of the length between front and rear ends of the first housing 1a and the length between front and rear ends of the second housing 1b is 0.9 to 1 or 1 to 1.2, which may achieve miniaturization while reasonably balancing a good relationship between the air volume and the airflow pressure. Further, the ratio close to 1:1 may make the first housing 1a and the second housing 1b more aesthetically pleasing in appearance.

As shown in FIGS. 2 to 4, the mix-flow fan 2 includes a rotation seat 21 and a plurality of first blades 22, where the rotation seat 21 includes a radially enlarged airflow guiding surface 211 from back to front; the plurality of the first blades 22 are connected to and spaced apart on the airflow guiding surface 211, and specifically, the plurality of the first blades 22 are arranged equidistant on the airflow guiding surface 211. Each first blade 22 extends helically at a predetermined angle from back to front and along a circumferential direction of the airflow guiding surface 211. When viewed from back to front, the space between any two adjacent the first blades 22 on their front ends is longer than the space between the two adjacent the first blades 22 on their rear ends, which may facilitate increasing the air inlet. The rotation seat 21 is substantially in the shape of a truncated cone, i.e., the rotation seat 21 has a radial cross-sectional area at its rear end smaller than a radial cross-sectional area at its front end. That is, the rotation seat 21 has a relatively large radial cross-section at its front end. The rotation seat 21 further includes an extension wall 213 connected to an inner wall of the rotation seat 21 and extending forwardly, the extension wall 213 together with the rotation seat 21 enclosing to define a first cavity 214 with an opening facing forwardly.

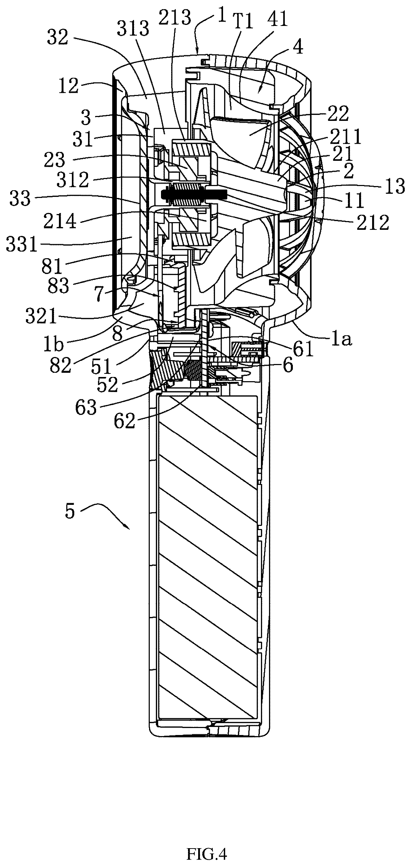

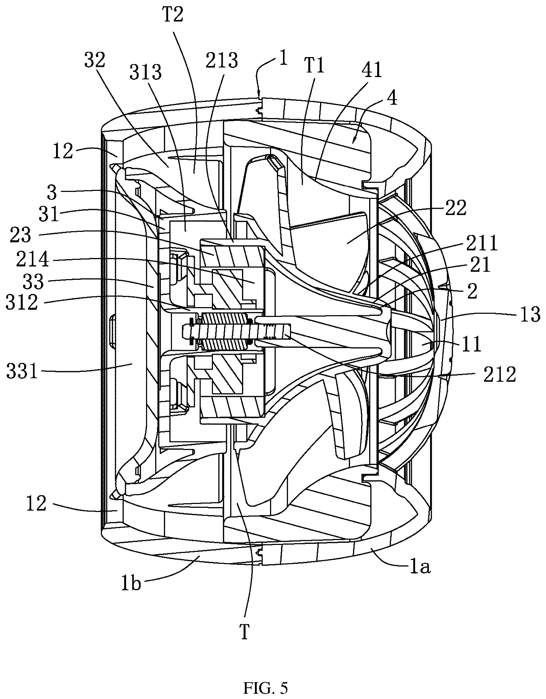

As shown in FIGS. 4 and 5, at least a portion of the airflow guiding surface 211 is recessed towards the rotation shaft 212. It should be understood that at least a portion of the airflow guiding surface 211 may be recessed towards the rotation shaft 212 to allow the mix-flow fan 2 to gather an expanded air volume and create a high air pressure. Of course, the airflow guiding surface 211 may be an inclined plane or may be at least partially protruding towards a direction away from the rotation shaft 212, which is not limited herein.

As shown in FIGS. 3 to 5, the pressurizing member 3 includes a pressurizing seat 31 and a plurality of second blades 32, where the pressurizing seat 31 includes a pressurizing surface 311 that is at least partially radially enlarged from back to front; the plurality of the second blades 32 are connected to and spaced apart on the pressurizing surface 311, and specifically, the plurality of the second blades 32 are arranged equidistantly on the pressurizing surface 311; the plurality of the second blades 32 are connected to the housing 1. After an oblique airflow generated by the mix-flow fan 2 flows to the pressurizing surface 311, the plurality of the second blades 32 re-arrange and transform the airflow to form a direct current airflow blowing out parallel to the rotation shaft 212, so as to increase the blowing distance and reduce the turbulence, noise, and vibration, which may reduce the noise emitted from the turbulence crosstalk for realizing noise reduction, and to convert the sharp sound into a low sound, thereby reducing the noise of the mixed-flow airflow generated by the mix-flow fan 2. In addition, a static pressure may be increased, energy consumption may be reduced, and the concentration of the air out of the mix-flow fan 2 may be enhanced. That is, the second blades 32 may equalize the airflow formed by the mix-flow fan 2 and increase the airflow pressure. The pressurizing seat 31 is connected to the housing 1 through the second blades 32, the rotation seat 21 is connected to the pressurizing seat 31 through a fixing fit structure, and the mix-flow fan 2 is relatively fixed in the housing 1 through the pressurizing seat 31. A radius value of a maximum radius surface on a front end of the pressurizing member 3 is 21.3 to 22 mm, such that the portable blade-shrouded fan is easy to carry while ensuring sufficient air volume and air pressure.

As shown in FIGS. 3 to 5, at least a portion of the pressurizing surface 311 is radially enlarged from back to front, while at least a portion of the pressurizing surface 311 is recessed towards the rotation shaft 212. At least a portion of the airflow guiding surface 211 and at least a portion of the pressurizing surface 311 are both radially recessed, to form concave surfaces for absorbing some noise from the airflow. Specifically, the pressurizing surface 311 is generally radially increasing from back to front. Of course, in other embodiments, in the direction from back to front, the pressurizing surface 311 may extend forward parallel to the rotation shaft 212 before radially increasing, or extend radially decreasing and then radially increasing, which is not limited herein.

As shown in FIGS. 3 to 5, the pressurizing seat 31 is substantially in the shape of a truncated cone, i.e., the pressurizing seat 31 has a radial cross-sectional area at its rear end smaller than a radial cross-sectional area at its front end. That is, the pressurizing seat 31 has a relatively large radial cross-section at its front end. A radius of the radial cross-section on the front end of the pressurizing seat 31 is 21.3 to 22 mm, for expanding the air blowing area while ensuring sufficient air volume and air pressure. Each of the airflow guiding surface 211 and the pressurizing surface 311 is generally radially enlarged in a flared shape to form an outwardly expanding pressurizing ramp, and the pressurizing seat 31 has a thickness of 9.5-14.5mm in the front-back direction to greatly increase the pressurizing stroke of the airflow. Further, the pressurizing ramp may cooperate with the housing 1 to convert the sharp noise into a low sound. In the direction from back to front, the pressurizing seat 31 extends radially enlarged and the second housing 1b extends radially reduced. That is, the second housing 1b and the pressurizing seat 31 extend forward while extending close to each other, such that the airflow is pressurized out of a gap defined by the front end of the pressurizing seat 31 and the front end of the second housing 1b, which is conducive to increasing the airflow force, the airflow pressure, and the distance of the air delivery.

As shown in FIGS. 4 and 5, the rotation seat 21 and the pressurizing seat 31 are arranged in close spacing in the axial direction, the airflow guiding surface 211 and the pressurizing surface 311 are arranged in close spacing in the axial direction, and a spacing between the rotation seat 21 and the pressurizing seat 31 in the axial direction and a spacing between the airflow guiding surface 211 and the pressurizing surface 311 in the axial direction are each 1~4 mm, thereby enabling the mix-flow fan 2 to form a smooth airflow to the pressurizing surface 311, and thus reducing the noise generated by turbulent flow. The radial cross-section of the rotation seat 21 at its front end and the radial cross-section of the pressurizing seat 31 at its rear end are each circular, with a very small difference in radii. In some embodiments, the difference in radii between the radial cross-section of the rotation seat 21 at its front end and the radial cross-section of the pressurizing seat 31 at its rear end is less than 1 mm, allowing the airflow generated by the mix-flow fan 2 to flow smoothly to the pressurizing surface 311.

As shown in FIGS. 3 to 5, the pressurizing seat 31 defines a second cavity 313 with an opening facing downwardly, the extension wall 213 is inserted forwardly into the second cavity 313, and the first cavity 214 and the second cavity 313 at least partially overlap in the radial direction to reduce the occupied space. The mix-flow fan 2 further includes a motor 23, the motor 23 being an external rotor brushless motor 23, and the motor 23 is received in the first cavity 214 and the second cavity 313. The opening of the first cavity 214 and the opening of the second cavity 313 face towards and are communicated with each other to shield noise generated by the motor 23 and airflow noise, thereby converting the sharp noise into la ow sound. Further, the fixing fit structure of the mix-flow fan 2 and the pressurizing member 3 is received in the first cavity 214, making excellent use of space. The fixing fit structure specifically includes the rotation shaft 212 protruding forwardly from within the first cavity 214 and a post 312 formed by protruding backwardly from the second cavity 313, the rotation shaft 212 being inserted into the post 312 and fixed through a bearing part. The external rotor brushless motor 23 has a service life of up to 15,000 hours and is free of the electrical sparks generated during operation of the brushed motor 23, which may greatly reduce the interference of the electrical sparks to a remote-control radio equipment. Further, the friction is greatly reduced during operation in a brushless manner, which results in smooth operation and good noise reduction.

As shown in FIGS. 4 and 5, a safe pressurized distance exists between the air inlet plate 13 and a rear end of the rotation seat 21, allowing for a maximum pressurized deformation of the air inlet plate 13 within an allowable pressure range regarding material properties of the air inlet plate 13. In the embodiments, the distance between the air inlet plate 13 and the rear end of the rotation seat 21 is 5.5 to 7.5 mm, in order to have space at the rear end for the entry of a high volume of air, and have space for a maximum pressurized deformation of the air inlet plate 13 when subjected to the high volume of air. The radial cross-sectional area of the air inlet plate 13 is greater than or equal to a maximum radial cross-sectional area of the rotation seat 21, to ensure sufficient air inlet and to achieve noise reduction, thereby converting the sharp noise into a low sound. The radial cross-sectional area of the air inlet plate 13 is less than or equal to the radial cross-sectional area of the pressurizing seat 31 at its front end, and the air inlet portion 11 on the air inlet plate 13 is obscured by the pressurizing seat 31. When the portable blade-shrouded fan is in use, the air inlet portion 11 is not visible when viewing from front to back, i.e. light from the air inlet portion 11 is not projected from back to front, thereby reducing the effect of the rotation of the mix-flow fan 2 on the human eyes. As the rotation seat 21 is radially enlarged from back to front, the first blades 22 are closer to the air inlet plate 13 compared to the rotation seat 21, thereby enhancing a suction capacity of the mix-flow fan 2.

As shown in FIGS. 4 and 5, the front end of the pressurizing member 3 is recessed backwardly, and the front end of the pressurizing member 3 is further arranged with a front cover 33. The front cover 33 is recessed backwardly to form a negative pressure region 331, such that a localized airflow runs closely along a front surface of the front cover 33 after being blown out of the air outlet portion 12, thereby performing an airflow-compensation on the negative pressure region 331 and reducing turbulence. In other embodiments, the front cover 33 may be an IP image item that is detachable and interchangeable, and the front cover 33 may be exposed or covered by at least partially transparent material to enhance user interaction with the IP image item. By setting up the detachable and interchangeable front cover 33, the need to customize different molds for different partners may be avoided. That is, a set of molds can be applied to multiple IP partners, which may reduce the production cost of the IP partners by about 40%. Further, the exposed IP image item may increase the user's direct touching of the IP image item, thereby changing the traditional experience of using the IP image item. The front cover 33 may be configured to hold an aromatherapy component or a component that combines humidification and aromatherapy, or to store a USB cable, or as a mirror with LED lights, etc., which is not limited herein.

As shown in FIG. 3 to 5, the portable blade-shrouded fan 100 further includes a booster 4 that is arranged inside the housing 1 and surrounds a periphery of the mix-flow fan 2. In addition to having the effect of pressurization, the booster 4 further has a noise reduction effect similar to that of acoustic glass. A first channel T1 is formed between the mix-flow fan 2 and the booster 4, a second channel T2 is formed between the pressurizing member 3 and the housing 1, and the first channel T1 and the second channel T2 together form a pressurizing guiding channel T. The airflow is conducted from the air inlet portion 11 through the pressurizing guiding channel T, and then is conducted out from the air outlet portion 12. A front end of the booster 4 is connected to a portion of the pressurizing member 3 near the second housing 1b, i.e. the booster 4 is assembled forwardly to a rear side of the second blades 32. A rear end of the booster 4 is connected to a portion of the first housing 1a near the air inlet portion 11, with a spacing being defined between the booster 4 and the first housing 1a, for absorbing the noise generated by the rotation of the mix-flow fan 2.

As shown in FIGS. 3 to 5, the booster 4 includes a booster surface 41 facing the mix-flow fan 2 and at least partially radially enlarged from back to front. At least a portion of the airflow guiding surface 211 and at least a portion of the pressurizing surface 311 are both radially recessed, to form concave surfaces, while at least a portion of the booster surface 41 is radially protruding to form a convex surface, thereby increasing the volume within the pressurizing guiding channel T to gather the air volume. The distance of a minimum radial gap between the first blades 22 and the pressurizing surface 41 is maintained within an error range of an equivalent isolation distance, to isolate the airflow generated by the mix-flow fan 2 at its front end from flowing back around the minimum radial gap to its rear end, thereby increasing air pressure and reducing the noise from turbulent crosstalk.

As shown in FIGS. 3 to 5, the front end of the booster 4 is flush with a front end of the mix-flow fan 2, or the front end of the booster 4 protrudes forwardly over the front end of the mix-flow fan 2, for fully pressurizing. The height of the front end of the booster 4 is 1.4 to 3.7 mm, and the front end of the booster 4 and the housing 1 are stepped, such that the high-pressure air formed by the mix-flow fan 2 may flow quickly to the pressurizing member 3.

As shown in FIGS. 3, 4, 6 and 7, one of the second blades 32 defines a wire-through slot 321. In the embodiments, the second blade 32 connected to the handle 5 defines the wire-through slot 321, the wire-through slot 321 being in communication with the first cavity 214. At least a portion of a main board 6 is arranged in the handle 5. In the embodiments, a portion of the main board 6 is arranged in the handle 5, and another portion of the main board 6 is arranged in the housing 1, where the main board 6 is disposed behind the wire-through slot 321 in the front-back direction, and the main board 6 at least partially overlaps with the wire-through slot 321 in the front-back direction. A wire 7 connects the motor 23 to the main board 6, and specifically, the wire 7 is connected from the motor 23 to the main board 6 through the wire-through slot 321. The main board 6 includes a first surface 61 and a second surface 62 parallel to each other, the first surface 61 facing backwardly, and the second surface 62 facing forwardly. An end of the wire 7 is connected to the motor 23, and the other end of the wire 7 is connected to the main board 6 and disposed on the first surface 61. If the wire 7 is arranged on the second surface 62 of the main board 6, an assembler will have to mount the main board 6 in the housing 1 and the handle 5 with the wire 7 being obscured, which may result in the assembler not being able to ensure that the wire 7 is not squeezed by the main board 6, such that the wire 7 is easily pressed and damaged, the assembly is inconvenient, and is prone to be reworked. Therefore, the arrangement of the wire 7 on the first surface 61 of the main board 6 is conducive to improving assembly quality and assembly efficiency.

As shown in FIG. 3, FIG. 4, FIG. 6 and FIG. 7, a rear side of the wire-through slot 321 is further arranged with a wire plate 8 to restrict the wire 7 from moving. Each of both ends of the wire-through slot 321 is arranged with a resisting block 322 extending backwardly, the resisting block 322 being abutted against the wire plate 8 to restrict the wire plate 8 from moving on a mounting plane. An end of the wire plate 8 near the motor 23 extends toward the wire-through slot 321 to form a snap 81, the snap 81 being snap-fitted to the resisting block 322 through the wire-through slot 321 to limit a backward movement of the wire plate 8. An end of the wire plate 8 away from the motor 23 extends toward the wire-through slot 321 to form an insertion block 82, the insertion block 82 being insertion-fitted to the wire-through slot 321 to limit a forward movement of the wire plate 8. The wire plate 8 is further arranged with a tab 83 facing the wire-through slot 321, the tab 83 compressing the wire 7 to prevent a rear end of the wire 7 from oscillating in the wire-through slot 321 when the portable blade-shrouded fan is in use, thereby reducing a noise generated by oscillating friction between the wire 7 and the wire-through slot 321.

As shown in FIGS. 3, 4, 6 and 7, the second surface 62 is arranged with a light emitting member 63, the handle 5 defines an aperture 51 corresponding to the light emitting member 63, and a side of the wire-through slot 321 away from the motor 23 is arranged with a light guide post 52. An end of the light guide post 52 abuts against the second surface 62, and the other end of the light guide post 52 is connected to an inner side of the handle 5. Light emitted by the light emitting member 63 is directed along the light guide post 52 and out from the aperture 51. A spacing exists between the booster 4 and the light guide post 52. The wire 7 passes through the wire-through slot 321 and through the spacing between the booster 4 and the light guide post 52, around an outer wall of the booster 4, and then is electrically connected to the first surface 61, which may lead to a more compact and smaller overall structure and higher space utilization.

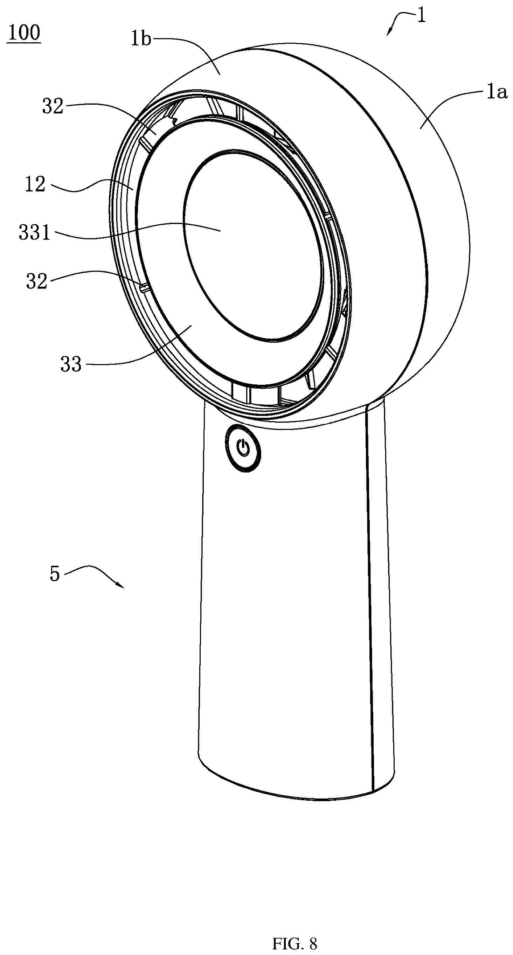

As shown in FIGS. 8 to 13, which are schematic diagrams of a portable blade-shrouded fan 100 according to a second embodiment of the present disclosure, the portable blade-shrouded fan 100 is larger and flatter than the portable blade-shrouded fan 100 of the first embodiment. In this embodiment, the ratio of the length between the front and rear ends of the first housing 1a and the length between the front and rear ends of the second housing 1b is 1~1.5, which may reasonably balance the relationship between the air volume and the air pressure while realizing lightness and thinness of the portable blade-shrouded fan. A radius value of a maximum radial surface on the front end of the pressurizing member 3 is 28~35mm, i.e. a radius of a radial cross-section on the front end of the pressurizing seat 31 is 28~35mm, which may expand the air blowing area while ensuring sufficient airflow volume and airflow pressure. The extension wall 213 does not forwardly protrude over the rotation seat 21 and the extension wall 213 is not forwardly inserted into the second cavity 313. The first cavity 214 and the second cavity 313 are arranged in close proximity to each other in a spaced apart manner, while the first cavity 214 and the second cavity 313 do not overlap with each other. The distance between the air inlet plate 13 and the rear end of the rotation seat 21 is 7.4 to 9.8 mm. The pressurizing surface 41 is a smooth surface for a smoother airflow towards the pressurizing member 3.

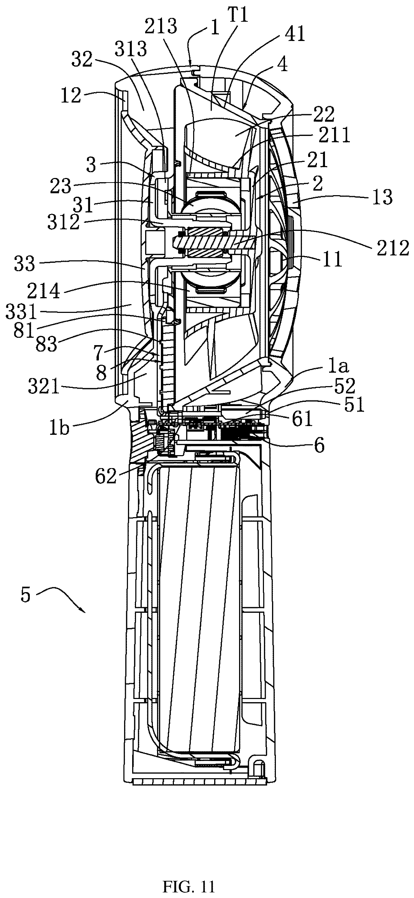

As shown in FIG. 11, in the embodiments, the main board 6 is disposed entirely within the handle 5, and the main board 6 is disposed below the wire-through slot 321. The first surface 61 of the main board 6 faces upwardly and the second surface 62 faces downwardly. The light emitting member 63 is disposed on the first surface 61. The aperture 51 is disposed on the second housing 1b and is connected to an inner side of the second housing 1b corresponding to the light guide post 52. A spacing exists between the booster 4 and the first surface 61. The wire 7 pass through the wire-through slot 321 and through the spacing between the booster 4 and the first surface 61, and is electrically connected to the first surface 61. The constituent elements in the second embodiment are substantially the same as those in the first embodiment, which will not be repeated herein.

## Claims

1. A portable fan, comprising:
a housing (1), wherein, an air inlet portion (11) is arranged at a rear side of the housing (1), an air outlet portion (12) is arranged at a front side of the housing (1), the air inlet portion (11) and the air outlet portion (12) are fluidly communicated to each other through an interior of the housing (1);
a mixed-flow fan (2), arranged inside the housing (1);
a pressurizing member (3), disposed at a front of the mixed-flow fan (2) and comprising a pressurizing seat (31), wherein the pressurizing seat (31) comprises a pressurizing surface (311), and a radial size of at least part of the pressurizing surface (311) gradually increases from the rear side to the front side;
wherein, the mixed-flow fan (2) comprises a rotation seat (21), an extension wall (213), a motor (23), and a plurality of first blades (22); the plurality of first blades (22) are mounted on the rotation seat (21); the extension wall (213) and the rotation seat (21) cooperatively define a first cavity (214) having an opening facing the front side; the pressurizing seat (31) has a second cavity (313) having an opening facing the rear side; the extension wall (213) extends to be inserted into the second cavity (313); an orthographic projection of the first cavity (214) along a radial direction onto a side wall of the housing (1) is at least partially overlapped with an orthographic projection of the second cavity (313) along the radial direction onto the side wall of the housing (1); the motor (23) is received in the first cavity (214) and the second cavity (313).

2. The portable fan according to claim 1, wherein, the extension wall (213) is arranged inside the rotation seat (21) and is connected to an inner wall of the rotation seat (21).

3. The portable fan according to claim 1, wherein, the extension wall (213) extends to the front side to protrude out of the rotation seat (21), a portion of the extension wall (213) that protrudes out of the rotation seat (21) is inserted into the second cavity (313); a spacing is formed between the rotation seat (21) and the pressurizing seat (31) in an axial direction of the housing (1).

4. The portable fan according to claim 2 or 3, wherein, an insertion depth of the extension wall (213) inserted into the second cavity (313) in an axial direction of the housing (1) is greater than a spacing between the extension wall (213) and a cavity wall of the second cavity (313) in the radial direction.

5. The portable fan according to claim 2 or 3, wherein, the rotation seat (21) comprises an airflow guiding surface (211), a radial size of the airflow guiding surface (211) gradually increases in a direction from the rear side to the front side; the plurality of first blades (22) are connected to the airflow guiding surface (211) and are spaced apart from each other;
a cross-sectional area, in the radial direction, of a rear end of the rotation seat (21) is smaller than a cross-sectional area of the extension wall (213) in the radial direction;
a cross-sectional area, in the radial direction, of a front end of the rotation seat (21) is greater than the cross-sectional area of the extension wall (213) in the radial direction.

6. The portable fan according to claim 5, wherein,
a spacing, in an axial direction of the housing (1), between the rotation seat (21) and the pressurizing seat (31) is in a range of 1 to 4 mm;
a cross section of the front end of the rotation seat (21) in the radial direction and a cross section of a rear end of the pressurizing seat (31) in the radial direction are both circular, and a difference between a radius of the cross section of the front end of the rotation seat (21) and a radius of the cross section of the rear end of the pressurizing seat (31) is less than 1 mm.

7. The portable fan according to claim 1, wherein, the mixed-flow fan (2) and the pressurizing member (3) are connected to each other via a fixation structure arranged inside the first cavity (214).

8. The portable fan according to claim 7, wherein, the fixation structure comprises a rotation shaft (212) and a first protruding post (312); the rotation shaft (212) protrudes from the first cavity (214) towards the front side; the first protruding post (312) protrudes from the second cavity (313) to the rear side, a front end of the rotation shaft (212) is inserted into the first protruding post (312) and is fixed to the first protruding post (312) via a bearing member.

9. The portable fan according to claim 8, wherein, the mixed-flow fan (2) further comprises a second protruding post that is arranged inside the first cavity (214), a rear end of the second protruding post is connected to the rotation seat (21), and a rear end of the rotation shaft (212) is inserted into a front end of the second protruding post.

10. The portable fan according to claim 9, wherein, the front end of the second protruding post is further inserted into the first protruding post (312), and a spacing is formed in the radial direction between the first protruding post (312) and the second protruding post.

11. The portable fan according to claim 8, wherein, the first protruding post (312) extends to an interior of the extension wall (213), and the motor (23) is an external rotor brushless motor (23) that is disposed in the spacing that is formed in the radial direction between the first protruding post (312) and the second protruding post.
